(19) Europäisches Patentamt / European Patent Office / Office européen des brevets

(11) **EP 2 876 459 A1**

(12) **DEMANDE DE BREVET EUROPEEN**

(43) Date de publication:
**27.05.2015 Bulletin 2015/22**

(51) Int Cl.:
**G01S 7/497** (2006.01)      *G01N 21/94* (2006.01)

(21) Numéro de dépôt: **14192149.4**

(22) Date de dépôt: **06.11.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **22.11.2013 FR 1302694**

(71) Demandeur: **Thales**
**92200 Neuilly Sur Seine (FR)**

(72) Inventeurs:
• **Rondeau, Philippe**
**26400 ALLEX (FR)**
• **Schlotterbeck, Jean-Pierre**
**26300 ROCHEFORT-SAMSON (FR)**
• **Lacondemine, Xavier**
**26000 VALENCE (FR)**

(74) Mandataire: **Brunelli, Gérald**
**Marks & Clerk France**
**Immeuble Visium**
**22, avenue Aristide Briand**
**94117 Arcueil Cedex (FR)**

(54) **Dispositif et procédé de détermination de présence de dégradations ou salissures sur un hublot de sonde d'anémométrie laser Doppler**

(57) Dispositif de détermination de présence de dégradations ou salissures sur un hublot (1) de sonde (2) d'anémométrie laser Doppler comprenant des moyens (6) de mise en oeuvre d'un balayage angulaire continu du faisceau laser, des moyens de détermination (7) d'une composante courante de spectre du signal de sortie de la sonde (2) correspondant à un signal parasite dû à des réflexions parasites sur le trajet commun à l'onde émise et à l'onde rétrodiffusée par le milieu en cours d'analyse de spectre du signal d'anémométrie, et des moyens de comparaison (8) de ladite composante courante de spectre du signal parasite courant avec une composante de référence de spectre du signal parasite de référence.

FIG.1

EP 2 876 459 A1

**Description**

La présente invention porte sur un dispositif et un procédé de détermination de présence de dégradations ou salissures sur un hublot de sonde d'anémométrie laser Doppler.

Les systèmes anémométriques, particulièrement pour les aéronefs sont basés sur des mesures de pression totale (sondes Pitot) et de pression statique, associées à des mesures de température. Il est cependant souhaitable de disposer d'un moyen dissemblable de mesure de la vitesse de l'aéronef par rapport à l'air environnant, communément appelée vitesse air, capable de fonctionner correctement à de basses vitesses.

Un dispositif de mesure de type LiDAR anémométrique, pour acronyme de "**l**ight **d**etection **a**nd **r**anging" en langue anglaise, ou, en d'autres termes, une sonde d'anémométrie laser Doppler, est considérée comme un moyen alternatif et totalement dissemblable de mesure permettant d'accéder à une mesure de la vitesse air, y compris aux basses vitesses.

Une dégradation de la performance de mesure d'anémométrie laser Doppler peut provenir de la présence de dégradations ou salissures sur le hublot permettant de transmettre le faisceau laser dans la masse d'air dont on cherche à mesurer la vitesse relative par rapport à l'aéronef.

Cette dégradation du hublot résulte en deux effets indésirables. Le premier effet est de dégrader le faisceau transmis dans la masse d'air tant en termes de qualité optique qu'en termes de niveau de puissance. Ceci a pour conséquence de réduire la puissance du signal d'anémométrie laser Doppler reçu. Le second effet est de créer un écho parasite dit "narcisse" qui accroit le niveau de bruit du système. Les salissures, rayures ou autres dégradations produisent en effet un ensemble de sources de diffusion du faisceau et une partie de l'onde diffusée est alors collectée par le système pour produire cet écho narcisse. Ces deux effets impliquent une dégradation du rapport signal à bruit de la mesure, réduisant la sensibilité du système et la précision de mesure. L'amplitude de cet écho narcisse étant généralement très supérieure à celle du signal permettant de réaliser la mesure, des filtrages coupe bande sont généralement implémentés de façon à éviter toute saturation des chaines de mesure. Pour un système destiné à une utilisation aéronautique avec les contraintes associées de robustesse, il est donc nécessaire de pouvoir détecter une telle dégradation et d'évaluer sa sévérité dans des processus d'IBIT (Initiated Built-In Test) ou CBIT (Continuous Built-In Test) afin de garantir la disponibilité de la mesure.

En l'absence de système de détection automatique de dégradation ou de salissure sur le hublot d'une sonde d'anémométrie laser Doppler, seul l'entretien régulier de telles sondes permet de s'assurer de leur bon fonctionnement.

Un but de l'invention est de remédier aux problèmes précités, et notamment de fournir, à coût réduit, un dispositif automatique de détection de présence de dégradations ou salissures sur un hublot de sonde d'anémométrie laser Doppler. L'invention s'applique à tout type de sonde d'anémométrie laser Doppler, et particulièrement à celles d'aéronefs.

Il est proposé, selon un aspect de l'invention, un dispositif de détermination de présence de dégradations ou salissures sur un hublot de sonde d'anémométrie laser Doppler comprenant des moyens de mise en oeuvre d'un balayage angulaire continu du faisceau laser, des moyens de détermination d'une composante courante de spectre du signal de sortie de la sonde correspondant à un signal parasite dû à des réflexions parasites sur le trajet commun à l'onde émise et à l'onde rétrodiffusée par le milieu en cours d'analyse de spectre du signal d'anémométrie, et des moyens de comparaison de ladite composante courante de spectre du signal parasite courant avec une composante de référence de spectre du signal parasite de référence. Le balayage angulaire continu peut être conique.

Un tel dispositif, permet à moindre coût de déterminer automatiquement la présence de dégradations ou salissures sur un hublot de sonde d'anémométrie laser Doppler, et ainsi alerter les systèmes utilisateurs ou directement le pilote, qui peut alors prendre les mesures qui s'imposent. Le pilote peut éventuellement fonder son jugement sur d'autres systèmes de mesure, et demander un entretien dès que possible du hublot de la sonde.

Dans un mode de réalisation, lesdits moyens de comparaison sont adaptés pour calculer la valeur absolue de la différence entre l'amplitude de ladite composante courante et l'amplitude de ladite composante de référence et pour comparer ladite différence avec un seuil.

Ainsi, il est aisé de déterminer la présence de dégradations ou salissures sur un hublot de sonde d'anémométrie laser Doppler.

Par exemple, ledit seuil est compris entre 0.5 dB et 20 dB, et de manière préférentielle, ledit seuil est compris entre 3 dB et 5 dB.

De telles valeurs de seuil entre 0.5 dB et 20 dB permettent de limiter le taux de fausses alarmes et de limiter la dégradation possible de la qualité de mesure avant l'avertissement du pilote. Une valeur de seuil comprise entre 3 dB et 5 dB correspond à un bon compromis entre taux de fausses alarmes et taux de non détection.

Il est également proposé, selon un autre aspect de l'invention, un aéronef muni d'un dispositif, tel que précédemment décrit, de détermination de présence de dégradations ou salissures sur un hublot de sonde d'anémométrie laser Doppler embarquée sur ledit aéronef.

Il est également proposé, selon un autre aspect de l'invention, un procédé de détermination de présence de dégradations ou salissures sur un hublot de sonde d'anémométrie laser Doppler comprenant les étapes consistant à effectuer un balayage angulaire continu du faisceau laser, déterminer une composante courante de spectre du signal de sortie de la sonde correspondant à un signal parasite du à des réflexions parasites sur le trajet commun à l'onde émise et à l'onde rétrodiffusée par le milieu en cours d'analyse de spectre du signal d'anémométrie, et comparer ladite composante courante de spectre du signal parasite courant avec une composante de référence de spectre du signal parasite de référence.

L'invention sera mieux comprise à l'étude de quelques modes de réalisation décrits à titre d'exemples nullement limitatifs et illustrés par les dessins annexés sur lesquels :

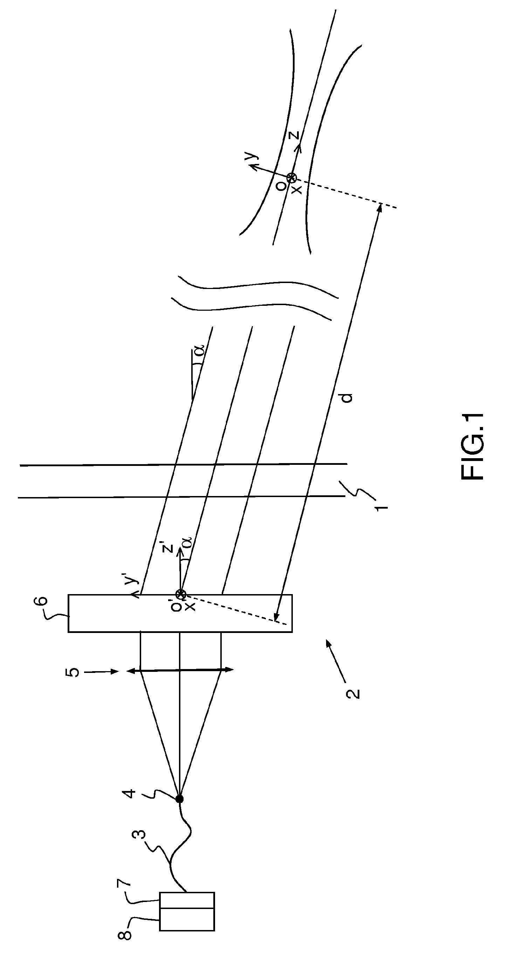

- la figure 1 illustre un dispositif de détermination de présence de dégradations ou salissures sur un hublot de sonde d'anémométrie laser Doppler, selon un aspect de l'invention;

Sur l'ensemble de figures, les éléments ayants les mêmes références sont similaires.

La figure 1 illustre schématiquement un dispositif de détermination de présence de dégradations ou salissures sur un hublot 1 de sonde 2 d'anémométrie laser Doppler.

La sonde comprend une fibre optique 3, un point source 4 en extrémité de la fibre optique 3, une optique 5 de mise en forme du faisceau laser, et un module 6 de mise en oeuvre d'un balayage angulaire continu du faisceau laser, en l'espèce un balayage conique continu.

Le dispositif comprend également un module de détermination 7 d'une composante courante de spectre du signal de sortie de la sonde correspondant à un signal parasite du à des réflexions parasites sur le trajet commun à l'onde émise et à l'onde rétrodiffusée par le milieu en cours d'analyse de spectre du signal d'anémométrie, et un module de comparaison 8 de ladite composante courante de spectre du signal parasite courant avec une composante de référence de spectre du signal parasite de référence.

Le module de comparaison 8 est adapté pour calculer la valeur absolue de la différence entre l'amplitude de la composante courante et l'amplitude de la composante de référence et pour comparer ladite différence avec un seuil compris entre 0.5 dB et 20 dB, et par exemple entre 3 dB et 5 dB.

Un seuil entre 0.5 dB et 20 dB permet de limiter le taux de fausses alarmes et de limiter la dégradation possible de la qualité de mesure avant l'avertissement du pilote. Un seuil compris entre 3 dB et 5 dB correspond à un bon compromis entre le taux de fausses alarmes et le taux de non détection.

Le dispositif de l'invention est particulièrement adapté pour être embarqué à bord d'un aéronef, permettant de détecter la présence de dégradations ou salissures sur un hublot de sonde d'anémométrie laser Doppler.

Ci-suit une explication plus détaillée d'un exemple de l'invention, dans lequel le faisceau est focalisé à une distance d distance de 25 m avec un rayon de courbure des fronts d'ondes sur la face de sortie du hublot d'environ 26 m. La différence entre la distance de focalisation et le rayon de courbure du faisceau s'explique par la modélisation du faisceau gaussien et le choix de la longueur de Rayleigh $Z_r$ associée choisie égale à 5 m. Le rayon de courbure du front d'onde à une distance x du point de focalisation ou "waist" en langue anglaise s'exprime par $R(x) = x + Z_r^2/x^2$ d'où le résultat avec x = 5 m. Le cône de balayage a une ouverture de demi-angle au sommet $\alpha$ est de 35° et une fréquence f de rotation de 10 Hz..

Ainsi la position du centre de courbure C(t) des fronts d'onde à la sortie du système optique est donnée par la relation suivante :

$$C(t) = \begin{pmatrix} d.\sin\alpha.\cos(2\pi ft) \\ d.\sin\alpha.\sin(2\pi ft) \\ d.\cos\alpha \end{pmatrix} \qquad (1)$$

Pour simplifier les écritures on peut poser A = d. sin $\alpha \approx$ 14.34 m. Si on considère un point diffusant P sur l'une des face du hublot de sortie de la tête optique, ces coordonnées sont :

$$P = \begin{pmatrix} x' \\ y' \\ z' \end{pmatrix} \qquad (2)$$

Avec z' compris entre 3 mm et 13 mm.

O', x', y' et z' représentent respectivement le sommet du cône de balayage et les coordonnées du point considéré dans le repère ayant O' pour origine et dont l'axe O'z' est confondu avec l'axe du cône

La distance entre le point diffusant P et le centre de courbure des fronts d'onde générés est donc :

$$PC(t) = \sqrt{\begin{array}{c}(d.\sin\alpha.\cos(2\pi ft) - x')^2 + \\ (d.\sin\alpha.\sin(2\pi ft) - y')^2 + \\ (d.\cos\alpha - z')^2\end{array}} \qquad (3)$$

La vitesse relative du point diffusant P par rapport au faisceau vaut donc :

$$\frac{dPC(t)}{dt} = 2\pi f.d.\sin\alpha.\frac{x'.\sin(2\pi ft) - y'.\cos(2\pi ft)}{\sqrt{\begin{array}{c}(d.\sin\alpha.\cos(2\pi ft) - x')^2 + \\ (d.\sin\alpha.\sin(2\pi ft) - y')^2 + \\ (d.\cos\alpha - z')^2\end{array}}} \qquad (4)$$

Le terme au dénominateur ne variant qu'au second ordre, si le point diffusant P est proche du sommet du cône, on peut faire l'approximation de le considérer constant et égal à d.

On obtient ainsi :

$$\frac{dPC(t)}{dt} \approx \sin\alpha.2\pi f.(x'.\sin(2\pi ft) - y'.\cos(2\pi ft)) \qquad (5)$$

Pour un point situé en y' = 0.01 m et x' = 0 m à l'instant t = 0 s, on obtient ainsi une vitesse relative de 0,36 m/s, soit une fréquence Doppler de 450 kHz.

De manière plus détaillée, on se place dans les conditions suivantes :

La longueur d'onde $\lambda$ du faisceau laser vaut 1,55 $\mu$m, et le rayon de courbure de front d'onde du faisceau sur la face de sortie du hublot d = 26 m. La longueur de Rayleigh $Z_R$ du faisceau d'illumination vaut 5 m, l'épaisseur e du hublot vaut 10 mm, le demi-angle $\alpha$ d'ouverture au sommet du cône de balayage vaut 35°, et la fréquence de rotation f vaut 5 Hz.

Il faut noter qu'il y a un décalage latéral du faisceau entre la face interne et la face externe du hublot 1. Ainsi, les deux faces du hublot 1 se situent respectivement à z' = 7,42 mm et z' = 13,32 mm du sommet du cône décrit par l'axe du faisceau les éclairant.

Les valeurs de d et $Z_R$ conduisent à un waist distant de 25 m de la face externe du hublot 1. Afin de simplifier les calculs, on considère simplement que le point de focalisation ou "waist" en langue anglo-saxonne est situé à une distance $d_w$ de 25 m du sommet du cône pour les deux faces du hublot 1.

On peut définir le courant hétérodyne $i_{het}$ produit par une particule fixe dans un Lidar monostatique par la relation suivante :

$$i_{het}(t) = 4\rho.\sqrt{P_{OL}.P_{IL}}.\frac{\lambda}{\pi}.\sqrt{\sigma}.\frac{e^{-2\frac{x^2+y^2}{\omega^2(z)}}}{\omega^2(z)}.\cos\left(\varphi_0 - \frac{4\pi}{\lambda}\cdot\left(z + \frac{x^2+y^2}{2.R(z)}\right) + 2.\arctan\frac{z}{Z_R}\right) \qquad (6)$$

dans laquelle: x, y et z représentent les coordonnées du point dans le repère direct (O, x,y,z) lié au faisceau rétro-propagé dont l'origine est au centre du waist du faisceau rétro-propagé avec Oz confondu avec l'axe du faisceau rétro-propagé (m), orienté depuis l'optique de collection vers le waist du faisceau rétro-propagé, l'orientation de axes Ox et Oy est indifférente,

$$d_{\omega_0} = \sqrt{\frac{Z_R \cdot \lambda}{\pi}}$$

est le rayon à $1/e^2$ en intensité au waist du faisceau gaussien rétro-propagé,

$$d_\omega(z) = d_{\omega_0} \cdot \sqrt{1 + \left(\frac{z}{Z_R}\right)^2}$$

est le rayon à $1/e^2$ en intensité du faisceau à la distance z du waist

$$R(z) = z \cdot \left(1 + \left(\frac{Z_R}{z}\right)^2\right)$$

est le rayon de courbure du front d'onde à la distance z du waist $\varphi_0$ est un terme de phase comprenant le bruit de phase du laser, la phase de la rétrodiffusion et un décalage de $\dfrac{\pi}{2}$

Il est alors possible d'obtenir la contribution à la densité spectrale de puissance ou DSP de la raie narcisse du point diffuseur générant un écho Narcisse considéré. La puissance moyenne $\langle i_{het}^2(t) \rangle$ vaut :

$$\langle i_{het}^2(t) \rangle = 8\rho^2 . P_{OL} . P_{IL} . \frac{\lambda^2}{\pi^2} . \sigma . \frac{e^{-4 \cdot \frac{x^2 + y^2}{\omega^2(z)}}}{\omega^4(z)} \qquad (7)$$

La fréquence générée vaut, en développant l'expression de R(z):

$$f_N = \frac{1}{2\pi} \cdot \dot{\varphi} = -\frac{2}{\lambda} \cdot \left(\dot{z} + \frac{x.\dot{x} + y.\dot{y}}{R(z)} - \frac{(x^2 + y^2).\dot{R}(z)}{2.R^2(z)}\right) + \frac{1}{\pi} \cdot \frac{Z_R.\dot{z}}{Z_R^2 + z^2} \qquad (8)$$

Le dernier terme de cette expression est négligeable devant le premier car $\dfrac{\lambda}{2} \ll \pi \cdot \dfrac{Z_R^2 + z^2}{Z_R}$. Le troisième terme de cette expression peut s'exprimer en prenant en compte le fait qu'il ne peut y avoir d'éclairement à grande distance de l'axe du faisceau donc $(x^2 + y^2) < A.\omega^2(z)$:

$$\frac{z^2.(x^2 + y^2).\left(1 - \frac{Z_R^2}{z^2}\right).\dot{z}}{2.\left(Z_R^2 + z^2\right)^2} < \frac{z^2.\frac{\lambda}{\pi}.A.\frac{Z_R^2 + z^2}{Z_R}.\left(1 - \frac{Z_R^2}{z^2}\right).\dot{z}}{2.\left(Z_R^2 + z^2\right)^2} < \frac{\lambda}{2\pi} \cdot \frac{A}{Z_R} \cdot \left(1 - \frac{Z_R^2}{z^2}\right) \cdot \dot{z} \ll \dot{z}$$

$$(9)$$

Ce terme est donc également négligeable devant le premier. On ne conserve donc par la suite que les deux premiers termes de cette expression.

Le passage des coordonnées d'un point dans le repère ayant pour origine le sommet du cône O' (à représenter sur la figure) et pour axe O'z' l'axe du cône au repère ayant pour origine le centre du waist W du faisceau et pour axe Wz" l'axe du faisceau se fait par l'opération suivante :

$$\begin{pmatrix} x \\ y \\ z \end{pmatrix} = R_z(2 \cdot \pi \cdot f_r \cdot t) \cdot R_y(-\alpha) \cdot R_z(-2 \cdot \pi \cdot f_r \cdot t) \cdot \begin{pmatrix} x' \\ y' \\ z' \end{pmatrix} + \begin{pmatrix} 0 \\ 0 \\ -f \end{pmatrix} \quad (10)$$

dans laquelle $R_y(\theta) = \begin{pmatrix} \cos\theta & 0 & \sin\theta \\ 0 & 1 & 0 \\ -\sin\theta & 0 & \cos\theta \end{pmatrix}$ et $R_z(\theta) = \begin{pmatrix} \cos\theta & -\sin\theta & 0 \\ \sin\theta & \cos\theta & 0 \\ 0 & 0 & 1 \end{pmatrix}$ soit en posant $\theta = 2 \cdot \pi \cdot f_r \cdot t$

$$\begin{pmatrix} x \\ y \\ z \end{pmatrix} =$$

$$\begin{pmatrix} \sin^2\theta + \cos^2\theta \cdot \cos\alpha & (\cos\alpha - 1) \cdot \cos\theta \cdot \sin\theta & -\cos\theta \cdot \sin\alpha \\ (\cos\alpha - 1) \cdot \cos\theta \cdot \sin\theta & \sin^2\theta \cdot \cos\alpha + \cos^2\theta & -\sin\theta \cdot \sin\alpha \\ \cos\theta \cdot \sin\alpha & \sin\theta \cdot \sin\alpha & \cos\alpha \end{pmatrix} \cdot$$

$$\begin{pmatrix} x' \\ y' \\ z' \end{pmatrix} + \begin{pmatrix} 0 \\ 0 \\ -f \end{pmatrix} \quad (11)$$

On obtient donc les dérivées des coordonnées du point dans le référentiel lié au faisceau simplement en dérivant cette expression.

$$\begin{pmatrix} \dot{x} \\ \dot{y} \\ \dot{z} \end{pmatrix}$$

$$= 2 \cdot \pi \cdot f_r$$

$$\cdot \begin{pmatrix} -(\cos\alpha - 1) \cdot \sin 2\theta & (\cos\alpha - 1) \cdot \cos 2\theta & \sin\theta \cdot \sin\alpha \\ (\cos\alpha - 1) \cdot \cos 2\theta & (\cos\alpha - 1) \cdot \sin 2\theta & -\cos\theta \cdot \sin\alpha \\ -\sin\theta \cdot \sin\alpha & \cos\theta \cdot \sin\alpha & 0 \end{pmatrix} \cdot \begin{pmatrix} x' \\ y' \\ z' \end{pmatrix}$$

$$(12)$$

Cette expression montre que les dérivées de la position relative selon chaque cordonnée sont du même ordre de grandeur. Il est donc possible de négliger également le second terme dans l'expression (8) de la fréquence générée $f_N$ car car x << R(z) et y << R(z) et on obtient l'expression finale qui es bien équivalente à la formule (5) trouvée par l'analyse simplifiée :

$$F_N = \frac{2}{\lambda} \cdot 2 \cdot \pi \cdot f_r \cdot \sin\alpha \, (x' \cdot \sin\theta - y' \cdot \cos\theta) \quad (13)$$

Considérons maintenant que les diffuseurs sont répartis de façon uniforme sur les faces du hublot. On peut dans ce cas considérer le coefficient de diffusion surfacique des face $\mu = \dfrac{\partial^2 \sigma}{\partial x \, \partial y}$. On peut alors choisir lo'orientation des axes x et y et l'origine des temps pour qu'à l'instant t = 0 le faisceau soit dévié dans la direction des x positifs. La densité spectrale de puissance générée à la fréquence $\nu$ à l'instant t = 0 vaut alors :

$$DPS(\nu) = \frac{1}{\frac{\partial \nu}{\partial y'}} \int_{-\infty}^{+\infty} \langle i_{het}^2(t) \rangle \left( x', y' = \frac{-\lambda \cdot \nu}{4 \cdot \pi \cdot f_r \cdot \sin \alpha}, z' \right) \cdot dx' \qquad (14)$$

En combinant les équations (14), (7) et (9) et en faisant l'approximation que $z \approx z' \cdot \cos \alpha$ - f on obtient :

$$DPS(\nu) = \frac{\lambda^3 \cdot \rho^2 \cdot P_{OL} \cdot P_{IL} \cdot \mu \cdot \sqrt{\pi}}{\pi^3 \cdot f_r \cdot \sin \alpha \cdot \omega^3(z) \cdot \cos \alpha} \cdot e^{-\frac{\lambda^2 \cdot \nu^2}{4 \cdot \pi^2 \cdot f_r^2 \cdot \sin^2 \alpha \cdot \omega^2(z)}} \qquad (15)$$

$$\int_{-\infty}^{+\infty} DPS(\nu) \cdot d\nu = \frac{2 \cdot \lambda^2 \cdot \rho^2 \cdot P_{OL} \cdot P_{IL} \cdot \mu}{\pi \cdot \omega^2(z) \cdot \cos \alpha} \qquad (16)$$

La raie Narcisse produite dans le spectre présente donc une puissance totale décrite par l'équation précédente (16) et une forme gaussienne de demi-largeur à 1/e2 (soit -8,6 dB) égale à

$$\Delta\nu = \frac{\sqrt{2} \cdot 2 \cdot \pi \cdot f_r \cdot \sin \alpha \cdot \omega(z)}{\lambda} \qquad (17)$$

Soit, avec l'application des valeurs numérique proposées au début de ce chapitre, $\Delta\nu$ = 131 kHz

**Revendications**

1. Dispositif de détermination de présence de dégradations ou salissures sur un hublot (1) de sonde (2) d'anémométrie laser Doppler comprenant des moyens (6) de mise en oeuvre d'un balayage angulaire continu du faisceau laser, des moyens de détermination (7) d'une composante courante de spectre du signal de sortie de la sonde (2) correspondant à un signal parasite dû à des réflexions parasites sur le trajet commun à l'onde émise et à l'onde rétrodiffusée par le milieu en cours d'analyse de spectre du signal d'anémométrie, et des moyens de comparaison (8) de ladite composante courante de spectre du signal parasite courant avec une composante de référence de spectre du signal parasite de référence.

2. Dispositif selon la revendication 1, dans lequel lesdits moyens de comparaison (8) sont adaptés pour calculer la valeur absolue_de la différence entre l'amplitude de ladite composante courante et l'amplitude de ladite composante de référence et pour comparer ladite différence avec un seuil.

3. Dispositif selon l'une des revendications précédentes, dans lequel ledit seuil est compris entre 0.5 dB et 20 dB.

4. Dispositif selon l'une des revendications précédentes, dans lequel ledit seuil est compris entre 3 dB et 5 dB.

5. Aéronef muni d'un dispositif de détermination de présence de dégradations ou salissures sur un hublot (1) de sonde (2) d'anémométrie laser Doppler embarquée sur ledit aéronef, selon l'une des revendications précédentes.

6. Procédé de détermination de présence de dégradations ou salissures sur un hublot (1) de sonde (2) d'anémométrie laser Doppler comprenant les étapes consistant à effectuer (6) un balayage angulaire continu du faisceau laser, déterminer (7) une composante courante de spectre du signal de sortie de la sonde (2) correspondant à un signal parasite du à des réflexions parasites sur le trajet commun à l'onde émise et à l'onde rétrodiffusée par le milieu en cours d'analyse de spectre du signal d'anémométrie, et comparer (8) ladite composante courante de spectre du signal parasite courant avec une composante de référence de spectre du signal parasite de référence.

FIG.1

Europäisches
Patentamt

European
Patent Office

Office européen
des brevets

**RAPPORT DE RECHERCHE EUROPEENNE**

Numéro de la demande

EP 14 19 2149

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2007/012878 A1 (QINETIQ LTD [GB]; HARRIS MICHAEL [GB]; JOHNSON MARTIN [GB]; SCULLION R) 1 février 2007 (2007-02-01) | 1-4,6 | INV. G01S7/497 |
| Y | * page 1, ligne 3-5 * <br> * page 2, ligne 4-17 * <br> * page 2, ligne 24 - page 3, ligne 2 * <br> * page 3, ligne 15-32 * <br> * page 4, ligne 12-29 * <br> * page 5, ligne 13-24 * <br> * page 5, ligne 31 - page 6, ligne 11 * <br> * page 6, ligne 24-31 * <br> * page 20, ligne 31 - page 21, ligne 14 * <br> ----- | 5 | ADD. G01N21/94 |
| Y | US 5 313 263 A (ABBISS JOHN B [US] ET AL) 17 mai 1994 (1994-05-17) <br> * colonne 1, ligne 7-21 * <br> * colonne 4, ligne 49-54 * <br> * colonne 4, ligne 66 - colonne 5, ligne 34 * <br> * figure 8 * <br> ----- | 5 | |
| A | EP 1 378 763 A1 (SICK AG [DE]) 7 janvier 2004 (2004-01-07) <br> * alinéas [0003], [0008], [0009]; figure 1 * <br> ----- | 1,6 | DOMAINES TECHNIQUES RECHERCHES (IPC) <br><br> G01S <br> G01N |

Le présent rapport a été établi pour toutes les revendications

| Lieu de la recherche | Date d'achèvement de la recherche | Examinateur |
|---|---|---|
| Berlin | 16 avril 2015 | Navas Montero, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 19 2149

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2015

| Document brevet cité au rapport de recherche | | | Date de publication | Membre(s) de la famille de brevet(s) | | | Date de publication |
|---|---|---|---|---|---|---|---|
| WO 2007012878 | A1 | | 01-02-2007 | AT | 453127 | T | 15-01-2010 |
| | | | | AU | 2006273774 | A1 | 01-02-2007 |
| | | | | CA | 2616992 | A1 | 01-02-2007 |
| | | | | DK | 1910869 | T3 | 06-04-2010 |
| | | | | EP | 1910869 | A1 | 16-04-2008 |
| | | | | ES | 2337499 | T3 | 26-04-2010 |
| | | | | JP | 2009503486 | A | 29-01-2009 |
| | | | | US | 2008210881 | A1 | 04-09-2008 |
| | | | | WO | 2007012878 | A1 | 01-02-2007 |
| US 5313263 | A | | 17-05-1994 | AUCUN | | | |
| EP 1378763 | A1 | | 07-01-2004 | AT | 430322 | T | 15-05-2009 |
| | | | | DE | 10230397 | A1 | 15-01-2004 |
| | | | | EP | 1378763 | A1 | 07-01-2004 |
| | | | | US | 2005006573 | A1 | 13-01-2005 |

EPO FORM P0460

Pour tout renseignement concernant cette annexe : voir Journal Officiel de l'Office européen des brevets, No.12/82